# EUROPÄISCHE PATENTSCHRIFT

(11) **EP 1 897 858 B1**
(45) Veröffentlichungstag und Bekanntmachung des Hinweises auf die Patenterteilung: **23.11.2016**
(21) Anmeldenummer: 07012547.1
(22) Anmeldetag: 27.06.2007
(51) Int. Cl.: C03B 7/00, C03B 7/10, C03B 7/14

(54) **Vorrichtung zur Formung von Glasartikeln**
Device for shaping glass articles
Dispositif destiné au formage d'articles en verre

(30) Priorität: 21.08.2006 DE 102006039175
(43) Veröffentlichungstag der Anmeldung: 12.03.2008
(73) Patentinhaber: Putsch GmbH & Co. KG, 58095 Hagen (DE)
(72) Erfinder: Wolf, Ferdinand, 58095 Hagen (DE); Hensel, Rainer, 58640 Iserlohn (DE)
(74) Vertreter: Köchling, Conrad-Joachim

(56) Entgegenhaltungen:
- EP-A- 0 546 216
- EP-A1- 0 719 240
- EP-A2- 0 712 812
- DE-A1- 3 401 011
- DE-A1- 3 910 439
- US-A- 4 772 306
- US-A- 5 266 093
- SCHWARZER S: "SERVO ELECTRIC HOT END SYSTEMS MECANISMES SERVO-ELECTRIQUES EN BOUT CHAUD" VERRE, INSTITUT DU VERRE, PARIS, FR, Bd. 11, Nr. 3, Juni 2005 (2005-06), Seiten 23-26, XP001233514 ISSN: 0984-7979

## Beschreibung

Die Erfindung betrifft eine Vorrichtung zur Formung von Glasartikeln, bestehend aus einer Speisevorrichtung zur Bevorratung einer Glasschmelze und zur Abgabe von mehreren Glassträngen schmelzflüssigen Glases, mehreren Scherblattpaaren, deren Scherblätter aus einer Grundstellung, in der der Glasstrang jeweils zwischen den Scherblättern durchfließt, in eine Arbeitsstellung, in der jeder Glasstrang unter Bildung eines Postens durchtrennt wird, und zurück in die Grundstellung bewegbar sind, einer Vorform, die mit Abstand nebeneinander mehrere Rohlingsformen aufweist, in denen die abgetrennten Posten abgelegt und gegebenenfalls zu Rohlingen geformt werden, sowie einer Formgebungsvorrichtung, zur Aufnahme der Rohlinge und zur Weiterverarbeitung der Rohlinge zu Glasartikeln, wobei der Transportweg, den die Posten von der Durchtrennung und Vereinzelung bis zu den Rohlingsformen der Vorform durchlaufen, unterschiedlich lang bemessen ist.

Des Weiteren betrifft die Erfindung ein Verfahren zur Formung von Glasartikeln, wobei eine Glasschmelze in mehreren zueinander parallelen Glassträngen aus einer Speisevorrichtung in einer ersten Richtung, die parallel zur Erdschwere gerichtet ist, der Z-Richtung, abgegeben wird und von jedem Glasstrang mittels jeweils eines Scherblattpaares ein Posten abgetrennt wird, wobei die Scherblätter jedes Scherblattpaares quer zur Z-Richtung, nämlich in X-Richtung verstellt werden, wobei die abgetrennten Posten der Glasstränge auf unterschiedlich langen Wegen jeweils einer zugehörigen Vorform zugeführt werden.

Im Stand der Technik sind unterschiedliche Vorrichtungen zum Abtrennen von Posten von einem oder mehreren Strängen aus schmelzflüssigem Glas bekannt. Beispielsweise ist aus der EP 0 719 240 B1 eine Vorrichtung bekannt, bei der mehrere Scherblattpaare an schwenkbar gelagerten Scherenarmen angeordnet sind, die aus einer Grundstellung in eine Arbeitsstellung schwenkbar sind, wobei die Bewegungsebene die X-Richtung darstellt. Das schmelzflüssige Glas wird dabei von einem Speiser oder mehreren Speisern oberhalb der Scherenblattpaare abgegeben, so dass mehrere schmelzflüssige Glasstränge in vertikaler Richtung, also in Z-Richtung abgegeben werden. Der Antrieb erfolgt dabei in der Weise, dass jeder Scherenarm, der mehrere Schermesser hält, durch einen gesonderten Antrieb schwenkend antreibbar ist.

Aus der EP 0 712 812 B1 ist eine Vorrichtung bekannt, bei der die Scherblätter eines Scherblattpaares linear und horizontal bewegbar sind. Auch hierbei fließen mehrere Glasstränge vertikal, in Z-Richtung, zwischen die geöffneten Scherblattpaare und werden durch die lineare Bewegung der Scherblätter durchtrennt.

Hierbei sind jeweils die rechten und linken Scherblätter auf einem separaten Träger angeordnet. Jeder Träger ist mittels eines elektrischen Linearmotors antreibbar, so dass alle Scherblätter gemeinsam in die Trennstellung und in die Grundstellung bewegt werden können.

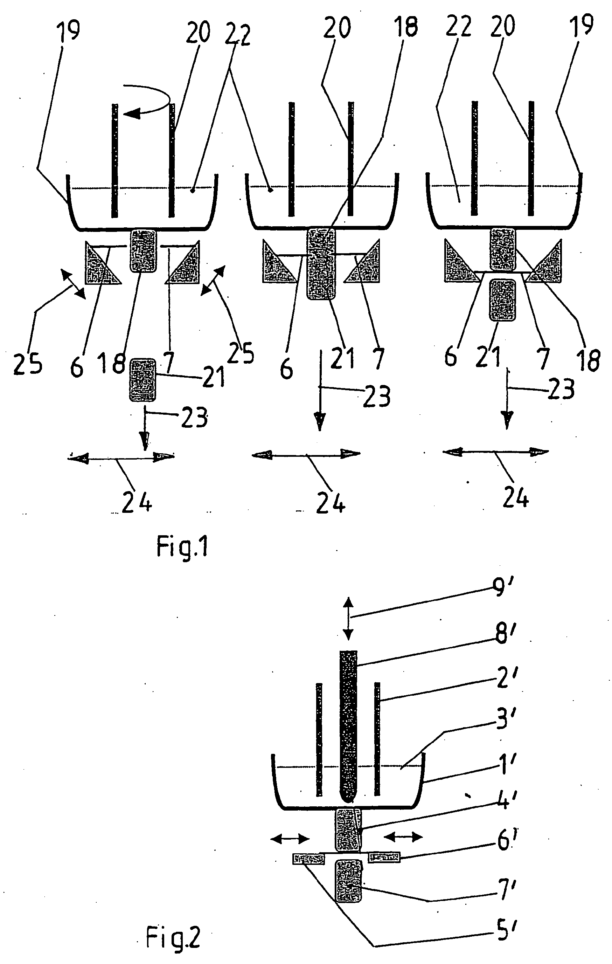

Bei den bekannten Vorrichtungen dieser Art tritt der Effekt auf, dass dann, wenn die Scherblätter in die Schließlage bewegt werden, der Glasstrang auf die Scherblätter aufläuft und gestaucht wird. Hierdurch wird der Tropfenfall gestört, so dass die vom Glasstrang abgetrennten Posten verformt sind. Dieser Effekt ist für die nachfolgende Verarbeitung des Postens nachteilig. Aus diesem Grund ist es bekannt, wie in Figur 2 verdeutlicht ist, eine Hilfseinrichtung vorzusehen.

In Figur 2 ist ein Speiser 1' gezeigt, in den über ein Drehrohr 2' schmelzflüssiges Glas einläuft. Der Pegelstand der Glasschmelze ist bei 3' angegeben. Unten aus dem Speiser 1' fließt der Glasstrang 4' aus schmelzflüssigem Glas ab. Mittels eines Scherblattpaares, bestehend aus den Scherblättern 5' und 6', wird der Glasstrang 4' durchtrennt und ein Posten 7' abgetrennt, der in eine Vorform 10' abgegeben wird. Um zu vermeiden, dass während des Abtrennvorganges des Postens 7' der Glassstrang 4' auf die Scherblätter 5', 6' aufläuft, ist ein Plunger 8' vorgesehen, der in Richtung des Bewegungspfeiles 9' verstellbar ist. Dieser Plunger 8' wird während des Schneidvorganges zurückbewegt, also in Richtung des Bewegungspfeiles 9' nach oben bewegt, um den Glasstrang 4' während des Schneidens zurück zu bewegen, so dass dieser nicht auf die Scherblätter 5',6' aufläuft und nicht verformt wird. Eine derartige Anordnung ist konstruktiv aufwendig und insbesondere bei einer hohen Schnittfrequenz der Scherblattpaare wenig wirkungsvoll. Die Schnittfrequenz kann beispielsweise 200 Schnitte pro Minute betragen.

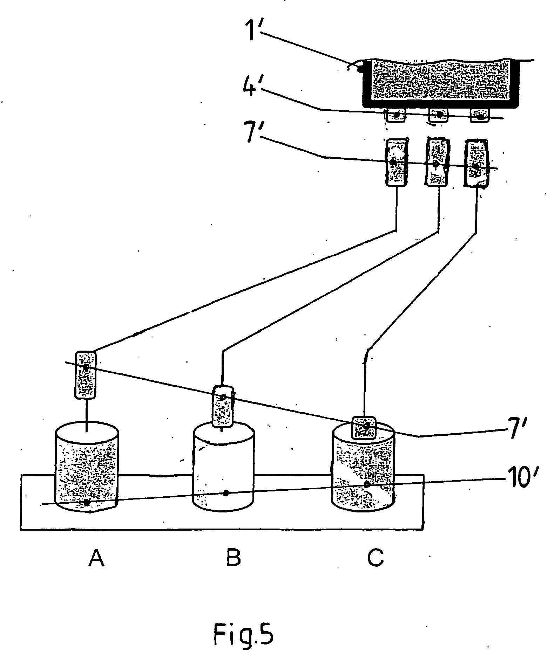

Weiterhin tritt ein nachteiliger Effekt auf, wenn mehrere Posten 7' mehrerer Glasstränge 4' gleichzeitig abgetrennt und nebeneinander positionierten Vorformen 10' zugeführt werden. Dieser Vorgang ist in Figur 5 verdeutlicht. Hierbei erreicht der rechtsbefindliche Posten 7' als erster die Vorform bei C und wegen der unterschiedlichen Weglänge von dem Trennschnitt bis zur Vorform 10' benötigt der zweite Posten 7' bis zur Erreichung der Vorform 10' (B) eine längere Zeit. Schließlich benötigt der in der Zeichnungsfigur 5 linke Posten 7' die längste Zeit, um die Vorform 10' (A) zu erreichen. Infolge dieser Tatsache hat der Posten 7' in der Vorform C eine längere Verweilzeit als der Posten 7' bezüglich der Vorform A. Erst wenn alle Posten 7' die entsprechenden Vorformen 10' (A bis C) erreicht haben, kann der Arbeitsschritt der Vorformung beginnen. Infolge der längeren Verweilzeit liegt der Posten 7' der Vorform 10' (C) tiefer an dem Mündungswerkzeug der Vorform C, wobei auch eine größere Erhitzung im Bereich der Vorform 10' (C) erfolgt. Andererseits ist der Posten 7' in der Vorform 10' (C) kälter als im Bereich der Vorform 10' (A). Dies bedeutet, dass diffizile unterschiedliche Kühleinstellungen zu berücksichtigen sind.

Aus der EP-A-O 712 812 und aus der EP-B-0 719 240 ist eine Vorrichtung gemäß Oberbegriff des Anspruches 1 beziehungsweise ein Verfahren gemäß Oberbegriff des Anspruches 8 bekannt.

Aus der DE-A-3 910 439 und aus der DE-A-3 401 011 ist es bekannt, Einzelantriebe für einzelne Scherblätter vorzusehen.

Ausgehend von dem eingangs bezeichneten Stand der Technik liegt der Erfindung die Aufgabe zugrunde, eine Vorrichtung gattungsgemäßer Art bzw. ein Verfahren gattungsgemäßer Art zu schaffen, die bzw. das es ermöglicht, gleiche Konditionen bezüglich des Postens einzustellen, wenn sämtliche Posten in den entsprechenden Vorformen abgelegt sind.

Zur Lösung dieser Aufgabe wird vorgeschlagen, dass jedes Scherblatt eines jeden Scherblattpaares einen separaten Stellantrieb für die Bewegung des Scherblattes aus der Grundstellung in die Arbeitsstellung und zurück in die Grundstellung aufweist, und dass die Vorrichtung eine Steuerung für die Antriebe der Scherblätter aufweist, wobei die Steuerung ausgelegt ist, mittels der Antriebe die Scherblätter eines Scherblattpaares gleichzeitig, die Scherblattpaare aber zu unterschiedlichen Zeiten zu bewegen, wobei das Scherblattpaar, bei dem der abgetrennte Posten den längsten Weg bis zur Vorform durchläuft, als erstes betätigt wird und das Scherblattpaar, bei dem der abgetrennte Posten den kürzesten Weg bis zur Vorform durchläuft, als letztes betätigt wird, so dass alle abgetrennten Posten etwa zeitgleich in der zugehörigen Vorform abgelegt werden.

Zur verfahrensgemäßen Lösung dieser Aufgabe wird vorgeschlagen, dass die Posten der Glasstränge analog zu den unterschiedlich langen Wegen zu unterschiedlichen Zeiten von den Glassträngen abgetrennt werden, indem der Posten, der den längsten Weg zur Vorform durchläuft, als erster abgetrennt wird, und der Posten, der den kürzesten Weg zur Vorform durchläuft, als letzter abgetrennt wird, so dass alle Posten etwa zeitgleich in der zugehörigen Vorform abgelegt werden.

Dadurch, dass jedes Scherblatt jeden Scherblattpaares einen separaten Stellantrieb für die Bewegung des Scherblattes aus der Grundstellung in die Arbeitsstellung und zurück in die Grundstellung aufweist, ist in Kombination mit der entsprechenden Steuerung der Antriebe die Möglichkeit geschaffen, die Posten aus mehreren Glassträngen in zeitlicher Abfolge derart von dem Glasstrang abzutrennen, dass in Abhängigkeit von der Zeit bzw. dem Weg, den jeder einzelne Posten bis zur Vorform zurückzulegen hat, eine solche Abstimmung erfolgt, dass alle Posten gleichzeitig die zugehörigen Vorformen erreichen. Auf diese Weise sind sämtliche Posten, die aus den Glassträngen abgetrennt werden, gleich konditioniert. Im Ergebnis ist damit das aus dem Posten zu verformende Glasprodukt mit hoher gleich bleibender Qualität zu fertigen.

Ein besonderer Vorteil, der sich durch den Einzelantrieb der einzelnen Scherblätter jedes Scherblattpaares ergibt, ist der, dass, je nach dem, ob das eine oder das andere Scherblatt voreilend gegenüber dem jeweils anderen Scherblatt eines Scherblattpaares bewegt wird, das Schnittzentrum in Richtung quer zum durchfließenden Glasstrang verschoben werden kann. Hierdurch können evtl. Abweichungen des auslaufenden Glasstranges von der vertikalen Solllage durch die Verlagerung des Schnittzentrums ausgeglichen werden.

Eine bevorzugte Weiterbildung der Vorrichtung wird darin gesehen, dass die Zeit, die jeder Posten von der Abtrennung bis zur Ablage in der Vorform benötigt, als Konstante in der Steuerung abgelegt ist, und die Steuerung mit entsprechender zeitlicher Verzögerung die Stellantriebe der Scherblattpaare aktiviert.

Weiterhin ist Gegenstand der Erfindung eine Vorrichtung, bei der die Glasstränge in Richtung der Erdschwere, der Z-Richtung, aus der Speisevorrichtung abfließen und die Schneidbewegung der Scherblätter der Scherblattpaare im Wesentlichen rechtwinklig zur Z-Richtung in X-Richtung erfolgt.

Um zu erreichen, dass möglichst exakt gleiche Glasposten von den Glassträngen abgetrennt werden, die in Bezug auf die Länge, den Durchmesser und die Temperatur genau definiert sind, wobei zudem eine hohe Schnittfolge mit stabilem Tropfenfall erreicht werden soll, schlägt die Erfindung vorrichtungsmäßig vor, dass der Bewegung der Scherblätter in X-Richtung eine Bewegung in Z-Richtung überlagert ist, so dass die Scherblätter mindestens über den Weg oder den Zeitraum, in welchem sie den Glasstrang zur Bildung eines Postens durchtrennen, aus einer Startposition synchron und gleichgerichtet zum Glasstrang in eine Endposition und zurück in die Startposition bewegt sind.

Verfahrensmäßig wird das dadurch erreicht, dass der Bewegung der Scherblätter in X-Richtung eine Bewegung in Z-Richtung überlagert wird, so dass die Scherblätter mindestens während des Trennvorganges des Glasstranges zur Erzeugung des Postens synchron und gleichgerichtet zum abfließenden Glasstrang bewegt werden, wobei die Scherblätter nach Abtrennen des Postens entgegen X-Richtung aus der Arbeitsstellung in die Grundstellung verstellt werden und gleichzeitig entgegen Z-Richtung aus der Endposition in die Startposition zurückgeführt werden.

Durch diese Ausbildung und Verfahrenstechnik folgt der Postenschnitt synchron mit der Fließrichtung und Fließgeschwindigkeit des Glasstranges. Hierdurch werden eine hohe Reproduzierbarkeit des Schnittergebnisses und eine hohe Wiederholgenauigkeit beim Abtrennen des Postens erreicht, wobei zudem eine extrem hohe Schnittfolge mit stabilem Tropfenfall realisiert werden kann. Dabei ist die Form der abgetrennten Glasposten konstant und ebenso deren Temperatur gleichmäßig.

Der diesbezüglichen Weiterbildung der Erfindung liegt die Idee zugrunde, dass dann eine Verformung des Postens vermieden werden kann, wenn der Schneidvorgang, also die Bewegung der Scherblätter in X-Richtung mit einer überlagerten Bewegung der Scherblätter in Z-Richtung kombiniert wird, so dass zumindest während des Schneidvorgangs ein Gleichlauf zwischen Scherblättern und ablaufendem Glasstrang in Z-Richtung erreicht wird. Nach Durchtrennung des Glasstranges und Vereinzelung der Posten können die Scherblätter in X-Richtung zurückgezogen und in Y-Richtung in die Startposition zurückbewegt werden, so dass sie für den nächsten Abtrennvorgang zur Verfügung stehen.

In Weiterbildung ist vorrichtungsgemäß vorgesehen, dass jedes Scherblatt eines Scherblattpaares mit einem ersten Antrieb gekoppelt ist, mittels dessen das Scherblatt in X-Richtung bewegbar ist, sowie mit einem zweiten Antrieb, mittels dessen der erste Antrieb samt Scherblatt in Z-Richtung bewegbar ist.

Bevorzugt ist zudem vorgesehen, dass jedes Scherblatt eines Scherblattpaares derart bewegt ist oder die Antriebe derart gesteuert sind, dass zu Beginn eines Trennzyklus zunächst die Bewegung in Z-Richtung oder die Inbetriebnahme des zweiten Antriebes erfolgt und erst nachfolgend die Bewegung in X-Richtung oder die Inbetriebnahme des ersten Antriebs erfolgt, und dass nach erfolgtem Trennschnitt die Scherblätter zurück in X-Richtung in die Grundstellung und in Z-Richtung zurück in die Startstellung bewegbar sind.

Hierdurch ist sichergestellt, dass die Scherblätter zunächst in gleicher Richtung und mit gleicher Geschwindigkeit wie der abfließende Glasstrang bewegt werden, bevor die Scherblätter in X-Richtung zur Abtrennung des Postens bewegt werden. Diese Ausbildung ist für die gleichmäßige Formung des Postens von Bedeutung.

Zudem kann vorgesehen sein, dass der erste Antrieb und der zweite Antrieb jeweils als Linearantrieb ausgebildet sind.

Zur konstruktiven Vereinfachung der Vorrichtung wird zudem vorgeschlagen, dass die jeweils ersten Scherblätter aller Scherblattpaare samt in X-Richtung verfahrbarem Antrieb oder Antrieben an einem ersten Gestellteil gehalten sind, die jeweils zweiten Scherblätter aller Scherblattpaare samt in X-Richtung verfahrbarem Antrieb oder Antrieben an einem zweiten Gestellteil gehalten sind, die beiden ersten und zweiten Gestellteile mit einer Hubplatte verbunden sind, die mittels eines sich gestellfest abstützenden zweiten Antriebes in Z-Richtung verfahrbar ist.

Eine vorteilhafte Weiterbildung des Verfahrens ist dadurch gekennzeichnet, dass jedes Scherblattpaar separat angetrieben wird, wobei die Antriebe in Abhängigkeit von der Zeit, die jeder Posten von der Abtrennung bis zur Ablage in der Vorform benötigt, so gesteuert werden, dass alle Posten gleichzeitig in der Vorform abgelegt werden.

Zudem kann vorgesehen sein, dass der Bewegung der Scherblätter in X-Richtung eine Bewegung in Z-Richtung überlagert wird, so dass die Scherblätter mindestens während des Trennvorganges des Glasstranges zur Erzeugung des Postens synchron und gleichgerichtet zum abfließenden Glasstrang bewegt werden, wobei die Scherblätter nach Abtrennen des Postens entgegen X-Richtung aus der Arbeitsstellung in die Grundstellung verstellt werden und gleichzeitig entgegen Z-Richtung aus der Endposition in die Startposition zurückgeführt werden.

Durch diese Verfahrensweise ist es möglich, Posten gleichmäßiger Form und Qualität zu separieren, wobei zudem eine hohe Schnittfolge mit stabilem Postenfall erreicht wird.

Bei den bisher üblichen Vorrichtungen und Verfahren, bei denen mit einem Plunger gearbeitet wird, ist ein diskontinuierlicher Ablauf des Glasstranges von dem Speiser die zwangsläufige Folge.

Gemäß der Erfindung wird vorgeschlagen, dass der Glasstrang von dem Speiser kontinuierlich mit konstanter Geschwindigkeit abgegeben wird.

Diese Verfahrensweise ist insbesondere deshalb möglich, weil die Scherblätter während des Schneidvorganges synchron mit dem ablaufenden Glasstrang bewegt werden, so dass der Glasstrang nicht durch Auflaufen auf die Scherblätter verformt wird.

Eine bevorzugte Verfahrensweise wird zudem darin gesehen, dass zu Beginn eines Trennzyklus die Scherblätter zunächst aus der Startposition in Z-Richtung verstellt werden und synchron zum Strang bewegt werden und nachfolgend erst überlagert aus der Grundstellung in X-Richtung in die Arbeitsstellung bewegt werden, bis der Trennschnitt zur Erzeugung des Postens durchgeführt ist, wobei dann die Scherblätter zunächst entgegen X-Richtung aus der Arbeitsstellung in Richtung der Grundstellung bewegt werden, sowie nachfolgend entgegen Z-Richtung aus der Endposition in die Startposition zurückbewegt werden.

Zudem ist bevorzugt vorgesehen, dass die Bewegung der Scherblätter eines jeden Scherblattpaares sowohl in X-Richtung als auch in Z-Richtung jeweils synchron erfolgt.

Auch ist bevorzugt, dass jedes Scherblatt separat in X-Richtung bewegt wird.

Zudem ist bevorzugt, dass alle Scherblätter gemeinsam in Z-Richtung bewegt werden.

Ausführungsbeispiele der Erfindung sind in der Zeichnung dargestellt und im Folgenden näher beschrieben.

Es zeigt:
- Figur 1: schematisch eine erfindungsgemäße Vorrichtung und deren Verfahrensweise;
- Figur 3: ein Ausführungsbeispiel in Vorderansicht;
- Figur 4: desgleichen im Schnitt A-A der Figur 3 gesehen;
- Figur 6: eine Veranschaulichung eines Aspekts der Erfindung, wobei die Schermesser in Draufsicht gezeigt sind;
- Figur 7: eine weitere Veranschaulichung, wobei zwei Schermesser in Draufsicht gezeigt sind.

In Figur 1 ist schematisch eine Vorrichtung gemäß der Erfindung und deren Verfahrensweise verdeutlicht.

In einem Speiser 19 befindet sich die Glasschmelze 22, die beispielsweise eine Temperatur von 1.000 ° C aufweist. Über ein Drehrohr 20 wird die Schmelze dem Speiser 19 zugeführt. Der Speiser 19 hat unten einen Ablauf für den Glasstrang 18. Bei 6 beziehungsweise 7 sind die Scherblätter eines Scherblattpaares mit Untermesser und Obermesser gezeigt. Bei 21 ist der abzutrennende beziehungsweise abgetrennte Posten dargestellt. Demzufolge besteht die Vorrichtung zum Abtrennen von Posten 21 von einem oder mehreren Strängen 18 aus schmelzflüssigem Glas aus mindestens einem Scherblattpaar mit Scherblättern 6,7 mit einem Speiser 19 zur Abgabe des Stranges 18 aus schmelzflüssigem Glas in einer ersten Richtung, die parallel zur Erdschwere gerichtet ist, nämlich der Z-Richtung. Die Z-Richtung ist mit 23 bezeichnet. Die Scherblätter 6,7 eines jeden Scherblattpaares sind aus einer Grundstellung die in Figur 1 links gezeigt ist, in der der Glasstrang 18 in Z-Richtung 23 zwischen den Scherblättern 6,7 ohne Berührung derselben durchfließen kann über eine Zwischenstellung gemäß Figur 1 in der Mitte in eine Arbeitsstellung gemäß Figur 1 rechts, in der der Glasstrang 18 unter Bildung eines Postens 21 durchtrennt, ist bewegbar. Nach Abtrennung des Postens 21 können die Scherblätter 6,7 wieder in die Grundstellung gemäß Figur 1 zurückbewegt werden. Die Bewegungsrichtung der Scherblätter 6,7 ist rechtwinklig zur Z-Richtung 23 in X-Richtung 24.

Gemäß der Erfindung wird der Bewegung der Scherblätter 6,7 in X-Richtung 24 eine Bewegung in Z-Richtung 23 überlagert, wie aus den Bewegungspfeilen 25 ersichtlich ist. Hierdurch wird erreicht, dass die Scherblätter 6,7 mindestens über den Weg oder Zeitraum, in welchen sie den Glasstrang 18 zur Bildung eines Postens 21 durchtrennen aus einer Startposition gemäß Figur 1 links über eine Zwischenposition gemäß Figur 1 Mitte in eine Endposition gemäß Figur 1 rechts und danach zurück in die Startposition gemäß Figur 1 links bewegt werden. Hierdurch wird erreicht, dass ohne weitere Hilfsmaßnahmen die nachfließende Masse des Glasstranges 18 sich nicht in der Situation gemäß Figur 1 Mitte oder gemäß Figur 1 rechts auf den Scherblättern 6,7 staut und verformt. Vielmehr folgen die Scherblätter 6,7 der Fließbewegung des Glasstranges 18, wobei gleichzeitig der Trennschnitt zur Formung des Postens 21 durchgeführt wird.

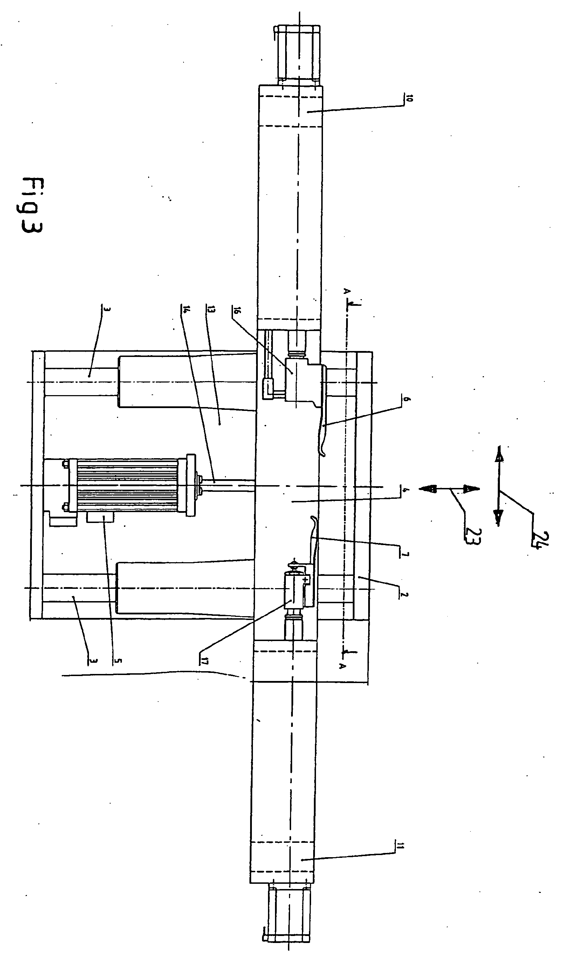

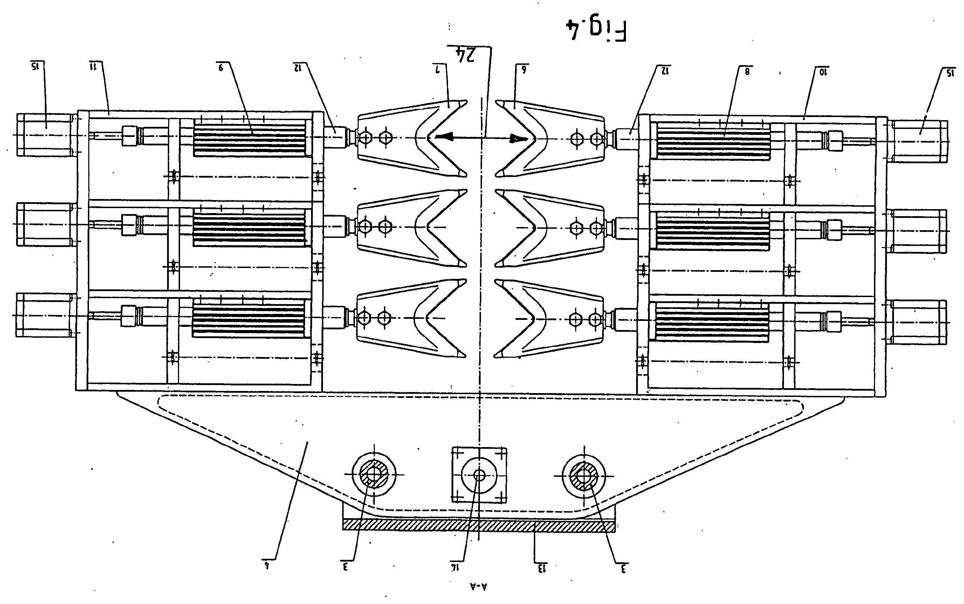

In Figur 3 und 4 ist eine konkrete Ausgestaltung einer solchen Vorrichtung gezeigt. Dabei sind jeweils drei Scherblätter 6 (Obermesser) und drei Scherblätter 7 (Untermesser) einander gegenüberliegend angeordnet und entsprechend verstellbar, so dass drei Glasstränge 18, die aus einem Speiser 19 oder mehreren Speisern abfließen, zur Separierung von Posten 21 durchtrennt werden können.

Bei dieser Ausbildung ist jedes Scherblatt 6 beziehungsweise 7 eines Scherblattpaares mit einem Antrieb 8 beziehungsweise 9 gekoppelt, mittels dessen das Scherblatt 6 beziehungsweise das Scherblatt 7 in X-Richtung 24 bewegbar ist. Des Weiteren ist ein zweiter Antrieb 5 vorgesehen, mittels dessen der erste Antrieb 8,9 samt Scherblatt 6,7 in Z-Richtung 23 bewegbar ist. Mittels der Antriebe 8,9 und 5 sind die Scherblätter 6,7 jedes Scherblattpaares derart bewegbar, dass zu Beginn eines Trennzyklus, also analog der Darstellung in Figur 1 links, die Bewegung in Z-Richtung 23 beziehungsweise die Inbetriebnahme des zweiten Antriebs 5 erfolgt, so dass die Scherblätter 6,7 sich parallel und gleichlaufend mit dem abfließenden Glasstrang 18 bewegen. Erst nachfolgend wird dann die Verstellung der Scherblätter 6,7 in X-Richtung 24 vorgenommen und der Trennschnitt zur Abtrennung des Postens 21 durchgeführt. Anschließend werden die Scherblätter 6,7 entgegen der Schneidrichtung in X-Richtung 24 zurückbewegt, in die Ausgangsstellung, die in Figur 4 beziehungsweise in Figur 1 links gezeigt ist, wobei auch dieser Bewegung eine gleichzeitige Bewegung in Y-Richtung 23 überlagert ist, die allerdings dann bei der Zurückführung der Scherblätter 6,7 entgegen der Abflussrichtung des Glasstranges 18 gerichtet ist.

Sowohl die ersten Antriebe 8,9 als auch der zweite Antrieb 5 sind als Linearantriebe ausgebildet. Wie insbesondere aus der Darstellung gemäß Figur 4 ersichtlich, ist jedes Scherblatt 6,7 eines jeden Scherblattpaares mit einem separaten in X-Richtung 24 verfahrbaren Antrieb 8,9 versehen. Hierdurch ist eine individuelle Betätigung der Scherblätter 6,7 ermöglicht. Die jeweils ersten Scherblätter 6 aller Scherblattpaare sind samt zugehörigen in X-Richtung 24 verfahrbaren Antrieben 8 an einem ersten Gestellteil 10 gehalten und befestigt. Die jeweils zweiten Scherblätter 7 aller Scherblattpaare sowie die zugehörigen in X-Richtung 24 verfahrbaren Antriebe 9 sind auf einem zweiten Gestellteil 11 montiert. Die beiden ersten und zweiten Gestellteile 10,11 sind durch eine Hubplatte 4 miteinander verbunden, die mittels des sich gestellfest abstützenden zweiten Antriebes 5 in Z-Richtung 23 verfahrbar ist. An den beiden äußeren Stirnflächen der Gestellteile 10,11 sind Stellvorrichtungen 15 für eine Messerfeinjustierung für die Messer der Scherblätter 6,7 und den Schneidkantendruck vorgesehen. Über ein Transmissionsgestänge wirkt die jeweilige Stellvorrichtung 15 an einer Scherblatthaltevorrichtung 16 auf die Einstellung des Messerschneidkantendrucks. Über die Schubstange 12 der jeweiligen Antriebseinheit 9, die mit dem Messerhalter 17 verbunden ist, wirkt eine jeweilige Stellvorrichtung 15 durch Verdrehen der Schubstange 12, die nach hinten aus der Antriebseinheit 8 beziehungsweise 9 vorragt, auf die Einstellung hinsichtlich der Parallelität der Schneidkanten der Scherblätter 6,7.

Eine Basisplatte 2 ist mit einer unten befindlichen Gestellplatte über einen Flansch 13 verbunden. Die unten angeordnete Gestellplatte bildet das Gegenlager für den zweiten Antrieb 5, der in Form einer Hub- und Senkvorrichtung ausgebildet ist. Dazu besteht der zweite Antrieb aus einem Arbeitszylinder, der über eine Kolbenstange 14 mit der Hubplatte 4 verbunden ist. Somit kann durch den zweiten Antrieb die Hubplatte 4 gegen die Basisplatte 2 aufwärts oder von dieser weg abwärts bewegt werden. Die Hubplatte 4 ist zudem durch an der Basisplatte 2 und am unten befindlichen Gestell befestigte Führungsbolzen 3 in ihrer Auf- und Abwärtsbewegung geführt und lagegesichert gehalten.

Beide individuell regelbare Bewegungsprofile in der Horizontalen und in der Vertikalen ergeben die Möglichkeit eines synchronen Schneidvorgangs zum vertikal nach unten fließenden Glasstrang 18. Das bedeutet, dass jedes Scherblatt 6,7 eine definierte aus den X- und Z- Achsengeschwindigkeiten resultierende, schräg nach unten und zum Glasstrangzentrum beziehungsweise Schneidzentrum gerichtete zeitliche und räumliche Bewegung durchführt.

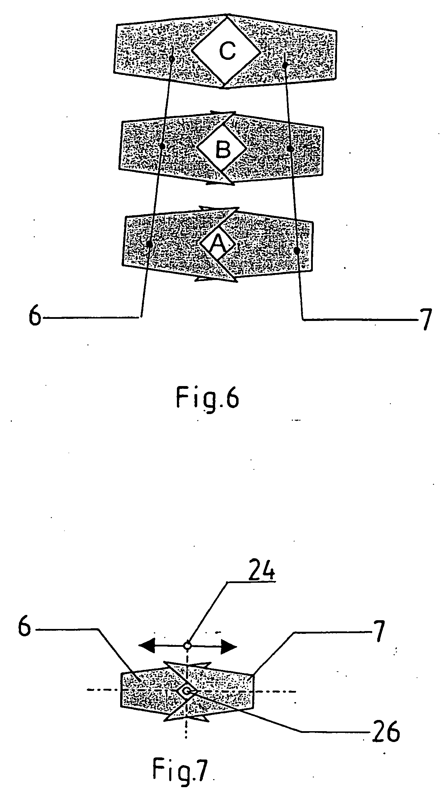

In Figur 6 ist verdeutlicht, wie die zeitliche Abfolge des Trennschnittes zur Vereinzelung der Posten 21 bei drei aus einer Speiseeinrichtung ablaufenden Glassträngen 18 erfolgt. Hierbei wird von einer Situation ausgegangen, wie sie in Figur 5 veranschaulicht ist. Gemäß der Erfindung ist jedes Scherblatt 6 bzw. 7 eines Scherblattpaares mit einem separaten Stellantrieb 8,9 für die Bewegung des Scherblattes aus der Grundstellung in die Arbeitsstellung und zurück in die Grundstellung vorgesehen. Durch eine entsprechende Steuerung der Antriebe der Scherblätter 6,7 können beispielsweise jeweils die Scherblätter 6,7 eines Scherblattpaares bezüglich der Situation A oder B oder C gleichzeitig bewegt werden, während die Scherblattpaare bezüglich der Situation A, B und C aber zu unterschiedlichen Zeiten bewegt werden. Das Scherblattpaar bezüglich der Situation A, bei dem der abgetrennte Posten 21 den längsten Weg zur Vorform (analog 10') durchläuft, wird zeitlich als erstes betätigt, mit entsprechendem Weg des Postens bezüglich der Situation B zu der entsprechenden Vorform werden die Scherblätter 6,7 des mittleren Scherblattpaares zeitlich später und als letztes die Scherblattpaare 6,7 bezüglich der Situation C betätigt. Auf diese Weise wird durch zeitliche Abfolge des Trennschnittes zur Erzeugung des Postens 21 eine Situation erreicht, in der sämtliche abgetrennten Posten, also bezüglich der Situation A bis C gleichzeitig die Vorform erreichen. Durch diese Ausbildung wird vermieden, dass die abgetrennten Posten 21 unterschiedliche Konditionierung erfahren, was für die Formung von Glasartikeln und/oder die Vorformung der Glasartikel von Nachteil wäre.

In Figur 7 ist veranschaulicht, dass auch das Schnittzentrum 26 durch Betätigung der Scherblätter 6,7 verlagert werden kann. Sofern die beiden Scherblätter 6,7 eines Scherblattpaares gleichzeitig angetrieben werden, liegt das Schnittzentrum 26 axial mittig unter der Auslauföffnung, aus der der Glasstrang 18 austritt. Sofern aus bestimmten Gründen eine Verlagerung des Schnittzentrums nach rechts oder links erforderlich ist, so kann entweder das rechte Schermesser 6 oder das linke Schermesser 7 gegenüber den jeweils Anderen vorlaufend betätigt werden, so dass hierdurch das Schnittzentrum 26 nach links oder rechts verlagert wird.

Die Erfindung ist nicht auf das Ausführungsbeispiel beschränkt, sondern im.Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Formung von Glasartikeln, bestehend aus einer Speisevorrichtung (19) zur Bevorratung einer Glasschmelze und zur Abgabe von mehreren Glassträngen (18) schmelzflüssigen Glases, mehreren Scherblattpaaren, deren Scherblätter (6,7) aus einer Grundstellung, in der der Glasstrang (18) jeweils zwischen den Scherblättern (6,7) durchfließt, in eine Arbeitsstellung, in der jeder Glasstrang (18) unter Bildung eines Postens (21) durchtrennt wird, und zurück in die Grundstellung bewegbar sind, einer Vorform, die mit Abstand nebeneinander mehrere Rohlingsformen aufweist, in denen die abgetrennten Posten (21) abgelegt und gegebenenfalls zu Rohlingen geformt werden, sowie einer Formgebungsvorrichtung, zur Aufnahme der Rohlinge und zur Weiterverarbeitung der Rohlinge zu Glasartikeln, wobei der Transportweg, den die Posten (21) von der Durchtrennung und Vereinzelung bis zur Vorform durchlaufen, unterschiedlich lang bemessen ist,
**dadurch gekennzeichnet, dass** jedes Scherblatt (6,7) eines jeden Scherblattpaares einen separaten Stellantrieb (8,9) für die Bewegung des Scherblattes (6,7) aus der Grundstellung in die Arbeitsstellung und zurück in die Grundstellung aufweist, und dass die Vorrichtung eine Steuerung für die Antriebe (8,9) der Scherblätter (6,7) aufweist, wobei die Steuerung ausgelegt ist, mittels der Antriebe (8,9)
die Scherblätter (6,7) eines Scherblattpaares gleichzeitig, die Scherblattpaare aber zu unterschiedlichen Zeiten zu bewegen, wobei das Scherblattpaar, bei dem der abgetrennte Posten (21) den längsten Weg bis zur Vorform durchläuft, als erstes betätigt wird und das Scherblattpaar, bei dem der abgetrennte Posten (21) den kürzesten Weg bis zur Vorform durchläuft, als letztes betätigt wird, so dass alle abgetrennten Posten (21) etwa zeitgleich in der zugehörigen Vorform abgelegt werden.

2. Vorrichtung nach Anspruch 1,
**dadurch gekennzeichnet, dass** die Zeit, die jeder Posten (21) von der Abtrennung bis zur Ablage in der Vorform benötigt, als Konstante in der Steuerung abgelegt ist, und die Steuerung mit entsprechender zeitlicher Verzögerung die Stellantriebe (8,9) der Scherblattpaare aktiviert.

3. Vorrichtung nach Anspruch 1 oder 2, wobei die Glasstränge (18) in, in Richtung der Erdschwere, der Z-Richtung, aus der Speisevorrichtung (19) abfließen und die Schneidbewegung der Scherblätter (6,7) der Scherblattpaare im wesentlichen rechtwinklig zur Z-Richtung (23) in X-Richtung (24) erfolgt,
**dadurch gekennzeichnet, dass** der Bewegung der Scherblätter (6,7) in X-Richtung (24) eine Bewegung in Z-Richtung (23) überlagert ist, so dass die Scherblätter (6,7) mindestens über den Weg oder den Zeitraum, in welchem sie den Glasstrang (18) zur Bildung eines Postens (21) durchtrennen, aus einer Startposition synchron und gleichgerichtet zum Glasstrang (18) in eine Endposition und zurück in die Startposition bewegt sind.

4. Vorrichtung nach Anspruch 3,
**dadurch gekennzeichnet, dass** jedes Scherblatt (6,7) eines Scherblattpaares mit einem ersten Antrieb (8,9) gekoppelt ist, mittels dessen das Scherblatt (6,7) in X-Richtung (24) bewegbar ist, sowie mit einem zweiten Antrieb (5), mittels dessen der erste Antrieb (8,9) samt Scherblatt (6,7) in Z-Richtung (23) bewegbar ist.

5. Vorrichtung nach einem der Ansprüche 3 oder 4,
**dadurch gekennzeichnet, dass** jedes Scherblatt (6,7) eines Scherblattpaares derart bewegt ist oder die Antriebe (5,8,9) derart gesteuert sind, dass zu Beginn eines Trennzyklus zunächst die Bewegung in Z-Richtung (23) oder die Inbetriebnahme des zweiten Antriebes (5) erfolgt und erst nachfolgend die Bewegung in X-Richtung (24) oder die Inbetriebnahme des ersten Antriebs (8,9) erfolgt, und dass nach erfolgtem Trennschnitt die Scherblätter (6,7) zurück in X-Richtung (23) in die Grundstellung und in Z-Richtung (24) zurück in die Startstellung bewegbar sind.

6. Vorrichtung nach einem der Ansprüche 3 bis 5,
**dadurch gekennzeichnet, dass** der erste Antrieb (8,9) und der zweite Antrieb (5) jeweils als Linearantrieb ausgebildet sind.

7. Vorrichtung nach einem der Ansprüche 3 bis 6,
**dadurch gekennzeichnet, dass** die jeweils ersten Scherblätter (6) aller Scherblattpaare samt in X-Richtung (24) verfahrbarem Antrieb (8) oder Antrieben (8) an einem ersten Gestellteil (10) gehalten sind, die jeweils zweiten Scherblätter (7) aller Scherblattpaare samt in X-Richtung (24) verfahrbarem Antrieb (9) oder Antrieben (9) an einem zweiten Gestellteil (11) gehalten sind, die beiden ersten und zweiten Gestellteile (10,11) mit einer Hubplatte (4) verbunden sind, die mittels eines sich gestellfest abstützenden zweiten Antriebes (5) in Z-Richtung (23) verfahrbar ist.

8. Verfahren zur Formung von Glasartikeln, wobei eine Glasschmelze in mehreren zueinander parallelen Glassträngen aus einer Speisevorrichtung in einer ersten Richtung, die parallel zur Erdschwere gerichtet ist, der Z-Richtung, abgegeben wird und von jedem Glasstrang mittels jeweils eines Scherblattpaares ein Posten abgetrennt wird, wobei die Scherblätter in Schneidrichtung jedes Scherblattpaares quer zur Z-Richtung, nämlich in X-Richtung verstellt werden, wobei die abgetrennten Posten der Glasstränge auf unterschiedlich langen Wegen jeweils einer zugehörigen Vorform zugeführt werden,
**dadurch gekennzeichnet, dass** die Posten der Glasstränge analog zu den unterschiedlich langen Wegen zu unterschiedlichen Zeiten von den Glassträngen abgetrennt werden, indem der Posten (21), der den längsten Weg zur Vorform durchläuft, als erster abgetrennt wird, und der Posten (21), der den kürzesten Weg zur Vorform durchläuft, als letzter abgetrennt wird, so dass alle Posten (21) etwa zeitgleich in der zugehörigen Vorform abgelegt werden.

9. Verfahren nach Anspruch 8,
**dadurch gekennzeichnet, dass** jedes Scherblattpaar separat angetrieben wird, wobei die Antriebe in Abhängigkeit von der Zeit, die jeder Posten von der Abtrennung bis zur Ablage in der Vorform benötigt, so gesteuert werden, dass alle Posten gleichzeitig in der Vorform abgelegt werden.

10. Verfahren nach Anspruch 8 oder 9,
**dadurch gekennzeichnet, dass** der Bewegung der Scherblätter (6,7) in X-Richtung (24) eine Bewegung in Z-Richtung (23) überlagert wird, so dass die Scherblätter (6,7) mindestens während des Trennvorganges des Glasstranges (18) zur Erzeugung des Postens (21) synchron und gleichgerichtet zum abfließenden Glasstrang (18) bewegt werden, wobei die Scherblätter (6,7) nach Abtrennen des Postens (21) entgegen X-Richtung (24) aus der Arbeitsstellung in die Grundstellung verstellt werden und gleichzeitig entgegen Z-Richtung (23) aus der Endposition in die Startposition zurückgeführt werden.

11. Verfahren nach Anspruch 8 bis 10,
**dadurch gekennzeichnet, dass** der Glasstrang (18) von dem Speiser (19) kontinuierlich mit konstanter Geschwindigkeit abgegeben wird.

## Claims

1. A device of forming glass articles, comprising a feeding device (19) for storing a glass melt and for delivering a plurality of glass strands (18) of molten glass, a plurality of pairs of shear blades, the shear blades (6, 7) of which can be moved from a start position, in which the glass strand (18) respectively passes between the shear blades (6, 7), into a work position, in which every glass strand (18) is separated forming a parison (21), and back into the start position, a parison mold including a plurality of spaced blank forms side by side, in which the separated parisons (21) are placed down and if applicable formed to blanks, and a shaping device, for receiving the blanks and for further processing the blanks to obtain glass articles, the transport path that is passed by the parisons (21) from the separation and individual distribution up to the parison mold, being of a different length,
**characterized by** that each shear blade (6, 7) of every pair of shear blades includes a separate actuator (8, 9) for moving the shear blade (6, 7) from the start position into the work position and back into the start position, and that the device includes a controller for the drives (8, 9) of the shear blades (6, 7), the controller being adapted to move, by means of the drives (8, 9) the shear blades (6, 7) of a pair of shear blades simultaneously, the pairs of shear blades, however, at different times, the pair of shear blades, wherein the separated parison (21) travels the longest way up to the parison mold, being the first one to be actuated, and the pair of shear blades, wherein the separated parison (21) travels the shortest way up to the parison mold, being the last one to be actuated, so that all separated parisons (21) are placed down in the corresponding parison mold at approximately the same time.

2. The device according to claim 1,
**characterized by** that the time that each parison (21) needs from separation up to placing-down in the parison mold, is stored as a constant in the controller, and the controller activates the actuators (8, 9) of the pairs of shear blades with a corresponding time delay.

3. The device according to claim 1 or 2, wherein the glass strands (18) flow off in the Z direction, in the direction of gravity, from the feeding device (19), and the cutting movement of the shear blades (6, 7) of the pairs of shear blades occurs essentially rectangularly to the Z direction (23) in the X direction (24),
**characterized by** that to the movement of the shear blades (6, 7) in the X direction (24) is superimposed a movement in the Z direction (23), so that the shear blades (6, 7) at least over the way or the period of time, in which they separate the glass strand (18) to form a parison (21), are moved from a start position synchronously and in the same direction as the glass strand (18) into an end position and back into the start position.

4. The device according to claim 3,
**characterized by** that each shear blade (6, 7) of a pair of shear blades is coupled to a first drive (8, 9), by means of which the shear blade (6, 7) is movable in the X direction (24), and to a second drive (5), by means of which the first drive (8, 9) together with the shear blade (6, 7) is movable in the Z direction (23).

5. The device according to one of claims 3 or 4,
**characterized by** that each shear blade (6, 7) of a pair of shear blades is moved in such a way, or the drives (5, 8, 9) are controlled in such a way that at the beginning of a separation cycle first the movement in the Z direction (23) or the setting into operation of the second drive (5) occurs and only then the movement in the X direction (24) or the setting into operation of the first drive (8, 9) occurs, and that after the completed separation step the shear blades (6, 7) are movable back in the X direction (23) into the start position and in the Z direction (24) back into the start position.

6. The device according to one of claims 3 to 5,
**characterized by** that the first drive (8, 9) and the second drive (5) are each configured as a linear drive.

7. The device according to one of claims 3 to 6,
**characterized by** that the respectively first shear blades (6) of all pairs of shear blades together with the drive (8) or drives (8) movable in the X direction (24) are supported at a first frame portion (10), the respectively second shear blades (7) of all pairs of shear blades together with the drive (9) or drives (9) movable in the X direction (24) are supported at a second frame portion (11), the two first and second frame portions (10, 11) are coupled to a lifting plate (4) that is movable in the Z direction (23) by means of a second drive (5) supported on the frame.

8. A method of forming glass articles, wherein a glass melt in a plurality of parallel glass strands is delivered from a feeding device in a first direction in parallel to gravity, the Z direction, and from each glass strand is separated a parison by means of a pair of shear blades, wherein the shear blades are adjusted in the cutting direction of each pair of shear blades transversely to the Z direction, namely in the X direction, wherein the separated parisons of the glass strands are fed on differently long ways to a respective parison mold,
**characterized by** that the parisons of the glass strands are separated, analogously to the differently long ways, at different times from the glass strands, by that the parison (21) that travels the longest way to the parison mold, is separated first, and the parison (21) that travels the shortest way to the parison mold, is separated last, so that all parisons (21) are placed down at approximately the same time in the respective parison mold.

9. The method according to claim 8,
**characterized by** that each pair of shear blades is driven separately, the drives being controlled, depending on the time that each parison needs from separation to placing-down in the parison mold, such that all parisons are placed down simultaneously in the parison mold.

10. The method according to claim 8 or 9,
**characterized by** that to the movement of the shear blades (6, 7) in the X direction (24) is superimposed a movement in the Z direction (23), so that the shear blades (6, 7), at least during the separation process of the glass strand (18) to form the parison (21), are moved from a start position synchronously and in the same direction as the flowing-off glass strand (18), the shear blades (6, 7), after separation of the parison (21), being adjusted against the X direction (24) from the work position into the start position and simultaneously against the Z direction (23) from the end position and into the start position.

11. The method according to claim 8 to 10,
**characterized by** that the glass strand (18) is delivered continuously at a constant speed by the feeding device (19).

## Revendications

1. Dispositif permettant le formage d'articles en verre, comprenant un dispositif d'alimentation (19) pour le stockage d'une masse de verre en fusion et le déversement de plusieurs fils de verre (18) de verre fondu, plusieurs paires de lames de cisaillement, les lames de cisaillement (6, 7) desquelles peuvent être déplacées à partir d'une position de départ, dans laquelle le fil de verre (18) respectivement traverse entre les lames de cisaillement (6, 7), dans une position de travail, dans laquelle chaque fil de verre (18) est coupé pour constituer une paraison (21), et vice-versa dans la position de départ, un moule ébaucheur comportant plusieurs parties de moules ébaucheurs espacés l'un à côté de l'autre, dans laquelle les paraisons coupées (21) sont déposées et le cas échéant formées à des ébauches, et un dispositif de mise en forme, destiné à recevoir les ébauches et pour le traitement ultérieur des ébauches à des articles en verre, le trajet de transport, qui est traversé par les paraisons (21) à partir de l'endroit de coupage et la séparation jusqu'au moule ébaucheur, a une longueur différente,
**caractérisé en ce que** chaque lame de cisaillement (6, 7) de chaque paire de lames de cisaillement comporte un actionneur (8, 9) séparé pour déplacer la lame de cisaillement (6, 7) à partir de la position de départ dans la position de travail et vice-versa dans la position de départ, et que le dispositif comporte une commande pour les dispositifs d'entraînement (8, 9) des lames de cisaillement (6, 7), la commande étant destinée à déplacer, au moyen des dispositifs d'entraînement (8, 9), les lames de cisaillement (6, 7) d'une paire de lames de cisaillement simultanément, cependant les paires de lames de cisaillement à des temps différents, la paire de lames de cisaillement, où la paraison coupée (21) traverse la voie la plus longue jusqu'au moule ébaucheur, étant la première à être actionnée, et la paire de lames de cisaillement, où la paraison coupée (21) traverse la voie la plus courte jusqu'au moule ébaucheur, étant la dernière à être actionnée, de façon que toutes les paraisons coupées (21) soient déposées dans le moule ébaucheur respectif à environ le même temps.

2. Dispositif selon la revendication 1,
**caractérisé en ce que** le temps à partir de l'endroit de coupage jusqu'au dépôt de chaque paraison (21) dans le moule ébaucheur est stocké comme constante dans la commande, et la commande active les actionneurs (8, 9) des paires de lames de cisaillement avec un retard temporel correspondant.

3. Dispositif selon la revendication 1 ou 2, dans lequel les fils de verre (18) s'écoulent dans la direction Z, dans la direction de la gravité, à partir du dispositif d'alimentation (19), et le mouvement de coupage des lames de cisaillement (6, 7) des paires de lames de cisaillement a lieu sensiblement perpendiculairement à la direction Z (23) dans la direction X (24),
**caractérisé en ce qu'**au mouvement des lames de cisaillement (6, 7) dans la direction X (24) est superposé un mouvement dans la direction Z (23), de façon que les lames de cisaillement (6, 7) au moins sur la course ou pendant le temps, dans laquelle ou lequel elles coupent le fil de verre (18) pour former une paraison (21), soient déplacées à partir d'une position de départ en synchronisme et dans la même direction comme le fil de verre (18) dans une position finale et vice-versa dans la position de départ.

4. Dispositif selon la revendication 3,
**caractérisé en ce que** chaque lame de cisaillement (6, 7) d'une paire de lames de cisaillement est couplée à un premier dispositif d'entraînement (8, 9), au moyen duquel la lame de cisaillement (6, 7) est déplaçable dans la direction X (24), et à un deuxième dispositif d'entraînement (5), au moyen duquel le premier dispositif d'entraînement (8, 9) ensemble avec la lame de cisaillement (6, 7) est déplaçable dans la direction Z (23).

5. Dispositif selon une des revendications 3 ou 4,
**caractérisé en ce que** chaque lame de cisaillement (6, 7) d'une paire de lames de cisaillement est déplacée de telle façon, ou les dispositifs d'entraînement (5, 8, 9) sont commandés de telle façon qu'au commencement d'un cycle de coupage d'abord le mouvement dans la direction Z (23) ou la mise en service du deuxième dispositif d'entraînement (5) ait lieu et seulement après le mouvement dans la direction X (24) ou la mise en service du premier dispositif d'entraînement (8, 9) ait lieu, et qu'après l'étape de coupage effectuée les lames de cisaillement (6, 7) sont déplaçables en retour dans la direction X (23) dans la position de départ et dans la direction Z (24) en retour dans la position de départ.

6. Dispositif selon une des revendications 3 à 5,
**caractérisé en ce que** le premier dispositif d'entraînement (8, 9) et le deuxième dispositif d'entraînement (5) chacun se présentent sous la forme d'un actionneur linéaire.

7. Dispositif selon une des revendications 3 à 6,
**caractérisé en ce que** les respectivement premières lames de cisaillement (6) de toutes les paires de lames de cisaillement ensemble avec le dispositif d'entraînement (8) déplaçable ou les dispositifs d'entraînement (8) déplaçables dans la direction X (24) sont retenues à une première partie de cadre (10), les respectivement deuxièmes lames de cisaillement (7) de toutes les paires de lames de cisaillement ensemble avec le dispositif d'entraînement (9) déplaçable ou les dispositifs d'entraînement (9) déplaçables dans la direction X (24) sont retenues à une deuxième partie de cadre (11), les deux premières et deuxièmes parties de cadre (10, 11) sont couplées à plateau élévateur (4) qui est déplaçable dans la direction Z (23) au moyen d'un deuxième dispositif d'entraînement (5) s'appuyant dans le cadre.

8. Procédé permettant le formage d'articles en verre, dans lequel une masse de verre en fusion est délivrée dans plusieurs fils de verre parallèles à partir d'un dispositif d'alimentation dans une première direction en parallèle à la gravité, la direction Z, et une paraison est coupée à partir de chaque fil de verre au moyen d'une paire de lames de cisaillement, dans lequel les lames de cisaillement sont réglées dans la direction de coupage de chaque paire de lames de cisaillement transversalement à la direction Z, c'est-à-dire dans la direction X, dans lequel les paraisons coupées des fils de verre sont alimentées sur des voies à des longueurs différentes à un moule ébaucheur respectif,
**caractérisé en ce que** les paraisons des fils de verre sont coupées, de façon analogue aux voies à des longueurs différentes, à des temps différents à partir des fils de verre, **en ce que** la paraison (21) qui traverse la voie la plus longue au moule ébaucheur, est coupée la première, et la paraison (21) qui traverse la voie la plus courte au moule ébaucheur, est coupée la dernière, de façon que toutes les paraisons (21) soient déposées à environ le même temps dans le moule ébaucheur respectif.

9. Procédé selon la revendication 8,
**caractérisé en ce que** chaque paire de lames de cisaillement est entraînée séparément, les dispositifs d'entraînement étant commandés, selon le temps à partir de l'endroit de coupage jusqu'au dépôt dans le moule ébaucheur de chaque paraison, de façon que toutes les paraisons soient déposées simultanément dans le moule ébaucheur.

10. Procédé selon la revendication 8 ou 9,
**caractérisé en ce qu'**au mouvement des lames de cisaillement (6, 7) dans la direction X (24) est superposé un mouvement dans la direction Z (23), de façon que les lames de cisaillement (6, 7), au moins pendant le procédé de coupage du fil de verre (18) pour former la paraison (21), soient déplacées à partir d'une position de départ en synchronisme et dans la même direction comme le fil de verre (18) s'écoulant, les lames de cisaillement (6, 7), après le coupage de la paraison (21), étant réglées en opposition à la direction X (24) à partir de la position de travail dans la position de départ et simultanément en opposition à la direction Z (23) à partir de la position finale et dans la position de départ.

11. Procédé selon la revendication 8 à 10,
**caractérisé en ce que** le fil de verre (18) est délivré en continu à une vitesse constante par le dispositif d'alimentation (19).
